# EUROPÄISCHE PATENTSCHRIFT

(11) **EP 2 805 909 B1**
(45) Veröffentlichungstag und Bekanntmachung des Hinweises auf die Patenterteilung: **12.10.2016**
(21) Anmeldenummer: 14180218.1
(22) Anmeldetag: 18.01.2012
(51) Int. Cl.: F03D 1/00, B66B 19/00, B66C 1/10, B66B 9/187, E04G 21/14, F02C 6/18, E04G 3/28, E04B 1/04, E04G 5/00, E04H 12/12, E04H 12/34, F16B 35/06, F24H 3/02, F16B 1/00, F03D 13/20

(54) **Wärmevorrichtung**
Heating device
Dispositif de chauffage

(30) Priorität: 26.01.2011 DE 102011003164
(43) Veröffentlichungstag der Anmeldung: 26.11.2014
(62) Teilanmeldung aus: 12700685.6
(73) Patentinhaber: Wobben Properties GmbH, 26607 Aurich (DE)
(72) Erfinder: van Ohlen, Hermann, 26529 Upgant-Schott (DE); Hölscher, Norbert, 26607 Aurich (DE); Honczek, Michael, 26632 Ihlow (DE); Kapitza, Jan, 26629 Großefehn (DE); Buck, Ralf, 26736 Krummhörn (DE)
(74) Vertreter: Eisenführ Speiser

(56) Entgegenhaltungen:
- WO-A2-2010/147459
- DE-U1- 8 424 193

## Beschreibung

Die vorliegende Erfindung betrifft eine Wärmvorrichtung zum Wärmen eines ringförmig umlaufenden Stoßbereichs zwischen einem rohrförmigen Turmsegment mit umlaufender Segmentwand und einem Turmfundament einer Windenergieanlage beim Aufbau der Windenergieanlage gemäß dem Oberbegriff des Anspruchs 1. Eine solche Wärmvorrichtung wird z.B. durch WO2010/147459 offenbart. Verfahren zum Errichten eines Turms einer Windenergieanlage, insbesondere eines Betonturms, sind grundsätzlich bekannt. Zunächst wird ein Betonfundament vorgesehen. Ein Betonturm in Fertigbauweise ist aus mehreren Turmsegmenten zusammengesetzt. Solche Turmsegmente können als rohrförmige und damit zylinderähnliche Elemente, nämlich im Gegensatz zu einem Zylinder mit leicht konischer Form, vorgesehen sein. Bei größeren Turmdurchmessern kommt auch eine Unterteilung in Umfangsrichtung in Betracht, so dass beispielsweise zwei im Querschnitt etwa halbkreisförmige Element oder andere teilkreisförmige Segmente zusammengesetzt werden.

Zunächst werden ein Turmsegment oder mehrere Turmsegmente als erste unterste Turmebene auf dem Fundament aufgesetzt. Es ist wichtig, dass diese erste Ebene sehr sorgfältig ausgerichtet, nämlich ausnivelliert wird. Hierfür wird dieses erste Segment bzw. mehrere Segmente genau ausnivelliert und in dieser ausnivellierten Position zunächst zumindest provisorisch fixiert, um dann zwischen Fundament und diesem untersten Turmsegment bzw. diesen untersten Turmsegmenten eine Ausgleichsmasse einzufügen, die schließlich aushärtet und diese nivellierte Ausrichtung fixiert.

Problematisch hierbei ist, dass die Aushärtung der Ausgleichsmasse eine gewisse Mindesttemperatur benötigt. Bei niedrigen Außentemperaturen um den Gefrierpunkt kann sich das Aushärten signifikant verlängern oder vollständig scheitern. Dies führt zum einen zu der Gefahr einer schlecht oder unvollständig ausgehärteten Ausgleichsmasse. Andererseits können durch das Abwarten einer verlängerten Aushärtedauer längere Standzeiten für beispielsweise einen zur Installation benötigten Kran resultieren. Ein solcher Kran, der bereits das/die erste(n) Turmsegment(e) auf das Fundament gehoben hat, bleibt für die Dauer des Aushärtens dieser Ausgleichsmasse ungenutzt. Es ergeben sich somit kostspielige zusätzliche Standzeiten des Krans.

Im Weiteren wird der Turm sukzessive aufgebaut, indem weitere Turmsegmente auf den bis dahin aufgebauten Teilturm aufgesetzt werden. Die hierfür notwendigen Arbeiten entstehen somit zunehmend in höherer Höhe. Im Bereich der obersten Ebene des jeweils fertiggestellten Turmabschnitts wird somit regelmäßig ein Gerüst oder Arbeitsplattform angeordnet, auf dem Arbeiter des Aufbauteams das Aufsetzen eines neuen Turmsegmentes kontrollieren können. Hierbei muss insbesondere kontrolliert werden, dass das jeweilige neue Turmsegment an exakt der richtigen, vorgesehenen Position angeordnet wird. Mittels eines Kranes wird so jedes Turmsegment sukzessive etwa an seinen Platz gehoben und ein Kranführer führt eine Feinpositionierung des betreffenden Turmsegmentes aus. Die genaue Positionierung jedes Turmsegmentes wird dann von den Arbeitern des Aufbauteams auf der besagten Arbeitsplattform manuell, also mit Muskelkraft vorgenommen. Insbesondere muss das betreffende Turmsegment regelmäßig in die korrekte Position gedreht werden. Das Aufbaupersonal hält das so per Hand ausgerichtete Turmsegment in der korrekten Position und der Kranführer senkt das Turmsegment dann langsam ab, während das Aufbauteam dafür sorgt, dass die ausgerichtete Position beibehalten wird. Es ist dabei zu berücksichtigen, dass ein solches Turmsegment etwa 5 bis 120 t wiegen kann. Es muss somit trotz Einsatz großer Muskelkräfte eine sehr feine Positionierung vorgenommen werden.

Dieses Verfahren zum Aufsetzen eines weiteren Turmsegmentes ist somit kompliziert, zeit- und arbeitsaufwändig und weist eine gewisse Fehleranfälligkeit. Zudem besteht die Gefahr von Verletzungen für die Arbeiter vor Ort, insbesondere die Gefahr von Quetschungen.

Ist das neue Turmsegment auf dem bis dahin errichteten Turm angeordnet, muss das Turmsegment von einer Traverse, mit der der Kran das Turmsegment gehoben hat, getrennt werden. Hierzu können Tragschlaufen, wie zu Schlaufen geformte Stahlseile an dem Turmsegment befestigt sein. Die Traverse wird dann von diesen Schlaufen gelöst, wie beispielsweise ausgehakt und die Stahlseilschlaufen als solche werden dann manuell von den Arbeitern auf der Arbeitsplattform von dem aufgesetzten Turmsegment entfernt. Auch dies ist aufwändig und erfordert einen recht hohen Personalaufwand einschließlich entsprechender Arbeitsplattform in der Höhe des bis dahin fertiggestellten Turms.

Ganz allgemein sei auf die Dokumente US 3,074,564 A, DE 10 2009 023 538 A1 und DE 20 2010 000 868 U1 verwiesen.

Der vorliegenden Erfindung liegt somit die Aufgabe zugrunde, den Aufbau eines Betonturms einer Windenergieanlage effizienter zu gestalten. Zumindest soll eine alternative Lösung vorgeschlagen werden.

Erfindungsgemäß wird eine Wärmvorrichtung zum Wärmen eines ringförmig umlaufenden Stoßbereichs zwischen einem rohrförmigen Turmsegment mit umlaufender Segmentwand und einem Turmfundament einer Windenergieanlage beim Aufbau der Windenergieanlage gemäß Anspruch 1 vorgeschlagen. Diese Wärmvorrichtung weist ein oder mehrere Abdeckplanen zum Abdecken des Stoßbereichs auf. Weiterhin weist sie eines oder mehrere ringförmige Traggerüste zum Tragen der bzw. einer der Abdeckplanen auf. Dabei ist das eine oder die mehreren Traggerüste so ausgebildet, dass ausreichend Raum für wenigstens eine erwachsene Person zwischen dem Stoßbereich und der auf das Traggerüst aufgelegten Abdeckplane ist.

Dieser Wärmvorrichtung liegt die Erkenntnis zugrunde, dass zum Ausrichten eines Turmsegmentes auf einem Turmfundament eine Ausgleichsmasse angeordnet werden kann, die insbesondere bei frostigen Temperaturen, also insbesondere Temperaturen um und insbesondere unter dem Gefrierpunkt schlecht, langsam oder gar nicht aushärtet. Die Errichtung von Türmen von Windenergieanlagen in kalten Gebieten und/oder zu kalten Jahreszeiten ist daher problematisch, kann zumindest zu Verzögerungen in der Errichtung des Windenergieanlagenturmes führen. Unter der Berücksichtigung, dass bereits zum Aufstellen des ersten Turmsegmentes ein entsprechender Kran notwendig ist, bedeutet schon eine Verzögerung des Aufbaus eine Leerlaufzeit des bestellten Krans mit den damit verbundenen Kosten. Durch die Verwendung der Wärmevorrichtung soll somit erreicht werden, trotz tiefen Umgebungstemperaturen die Temperatur in dem Bereich, in dem das Nivellieren mittels Ausgleichsmasse vorgenommen wird, zumindest insoweit zu erhöhen, als dass das Aushärten der Ausgleichsmasse nicht oder nicht wesentlich beeinträchtigt ist.

Die hierfür vorgeschlagene Wärmvorrichtung schafft im Wesentlichen die Anordnung einer Wärmeabdeckung um besagten zu wärmenden Bereich herum. Hierfür wird eine an den Turm angelehnte oder daran befestigte Haltevorrichtung vorgeschlagen, auf der eine entsprechende Abdeckplane angeordnet wird. Durch die Verwendung des Traggerüstes bzw. der Traggerüste kann die Abdeckung im Grunde so weit von der zu wärmenden Stelle weggehalten werden, dass ausreichend Raum für ein oder mehrere Personen zum Arbeiten entsteht. Die Traggerüste sind hierfür ringförmig ausgestaltet. Unter diese ringförmige Ausgestaltung fällt dabei nicht allein eine ringförmige Form im mathematischen Sinne eines Kreises, sondern auch polygonförmige Konstruktionen, die an die runde Form eines Windenergieanlagenturms bzw. Turmsegments angepasst sind.

Erfindungsgemäß ist eine äußere Teilabdeckung zum Anordnen außen um das Turmsegment herum vorgesehen, die ihrerseits wenigstens eine Abdeckplane und ein Traggerüst aufweist. So kann es gegebenenfalls ausreichend sein, nur mit einer äußeren Teilabdeckvorrichtung auszukommen, wenn die Außentemperatur nicht zu tief ist und die geschützte Position des Raumes in dem ersten Turmsegment eine ausreichend hohe Temperatur dort gewährleisten kann. Vorzugsweise ist eine innere Teilabdeckvorrichtung zum Anordnen im Inneren des Turmsegmentes vorgesehen, die eine insbesondere eigenständige Konstruktion aus Traggerüst oder Traggerüsten und Abdeckplan oder Abdeckplanen umfasst.

Vorzugsweise weist das wenigstens eine Traggerüst einen ringförmig umlaufenden oberen Tragabschnitt zum Befestigen an dem Turmsegment auf. Davon ausgehend kann das Traggerüst weiter aufgebaut werden, insbesondere können Abhaltestreben zum Abhalten der Abdeckplane angeordnet werden.

Eine Abdeckplane kann aus einem wasserdichten Material bestehen, um gleichzeitig auch einen Regenschutz zu bieten. Andererseits ist eine Abdeckplane hierauf nicht beschränkt, sondern es kommen auch luft- und/oder wasserdurchlässige Materialien in Betracht. Eine hohe Isoliereigenschaft dieser Plane kann vorgesehen sein. Je nach Außentemperatur kann eine dünne Plane ausreichen, die im Wesentlichen eine Luftzirkulation und insbesondere das Entweichen warmer Luft durch Konvektion verhindert oder zumindest minimiert.

Vorzugsweise ist ein Heizmittel, insbesondere ein Heizlüfter vorgesehen. Dieser erwärmt die Luft in dem Raum zwischen dem Stoßbereich und Abdeckplane und die Abdeckplane verhindert im Wesentlichen das Entweichen der so erwärmten Luft. Es ist zu wiederholen, dass ein Erwärmen auf Temperaturen kurz über dem Gefrierpunkt oftmals ausreichen kann, um das Aushärten der Ausgleichsmasse zu ermöglichen.

Vorzugsweise weist die Abdeckplane eine lichtabsorbierende Oberfläche auf. Hierdurch kann das Sonnenlicht zusätzlich zum Erwärmen herangezogen werden. Je nach Außentemperatur und Sonneneinstrahlung kann eine solche Erwärmung ausreichen, oder ergänzend wird ein Heizmittel wie bspw. ein Heizlüfter verwendet.

Nachfolgend wird die Erfindung an Hand von Ausführungsbeispielen unter Bezugnahme auf die begleitenden Figuren beispielhaft erläutert.
Figur 1 zeigt ein erstes Turmsegment mit einer Wärmvorrichtung in einer perspektivischen Ansicht.
Figur 2 zeigt einen Teil eines Unterbaus einer Wärmvorrichtung im Inneren eines Turmsegmentes.

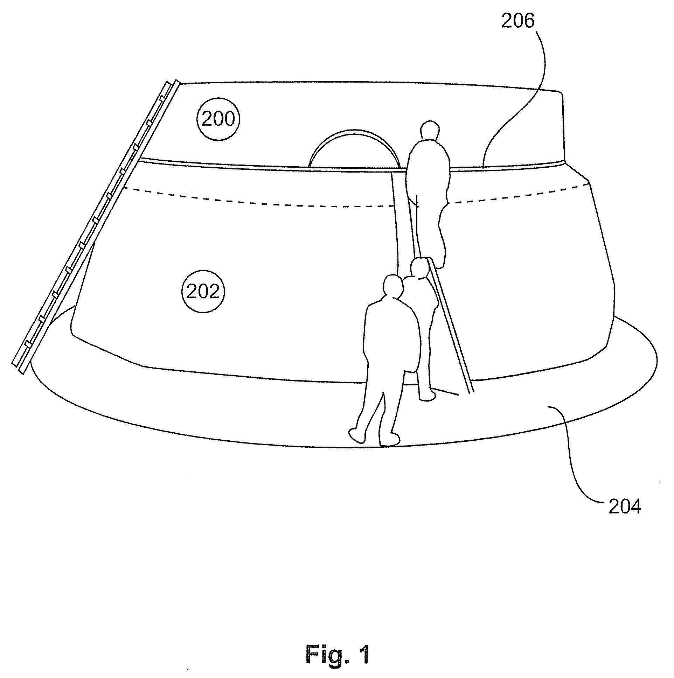

In der Figur 1 ist perspektivisch ein erstes auf einem Fundament aufgesetztes Turmsegment 200 dargestellt, um das herum eine Wärmvorrichtung mit einer äußeren Teilabdeckvorrichtung 202 dargestellt ist. Diese äußere Teilabdeckvorrichtung 202 umschließt den somit nicht erkennbaren Stoßbereich zwischen dem Turmsegment 200 und dem Fundament 204. Dabei schafft diese äußere Teilabdeckvorrichtung 202 einen geschützten Raum um das Turmsegment 200 herum, der in Höhe und Breite für erwachsene Personen ohne weiteres begehbar ist. Zur Veranschaulichung sind schematisch Personen angedeutet.

Die äußere Teilabdeckvorrichtung 202 ist an einer oberen, umlaufenden Schiene 206 an dem Turmsegment 200 befestigt und dichtet im Wesentlichen gegen das erste Turmsegment ab. Eine solche Abdichtung sollte dabei im Wesentlichen verhindern, dass Wärme durch Konvektion entweicht. Weiterhin ist ein Gerüst unterhalb der äußeren Teilabdeckvorrichtung 202 angeordnet, das auch mit dieser umlaufenden oberen Schiene verbunden ist und im Wesentlichen die äußere Form der äußeren Teilabdeckungsvorrichtung 202 bestimmt.

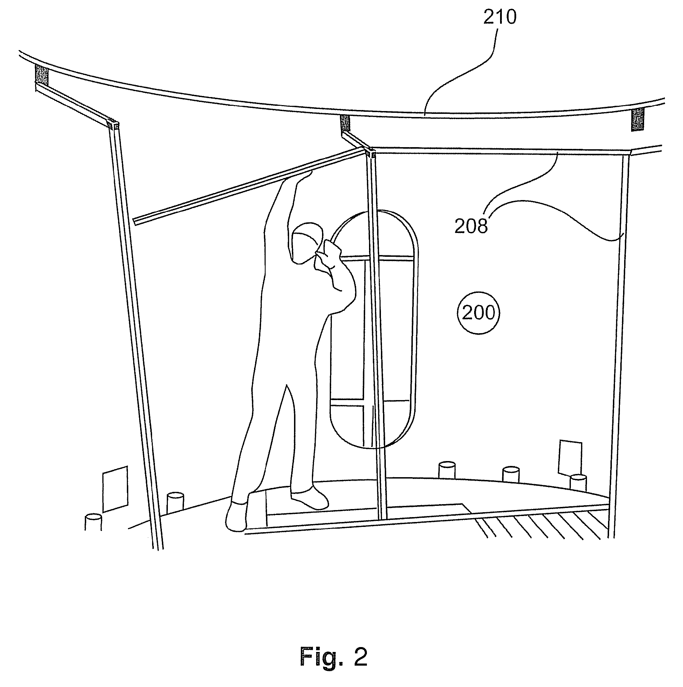

Figur 2 zeigt einen Teil eines Traggerüstes 208 einer noch fertig zu stellenden inneren Teilabdeckvorrichtung. Entsprechend zeigt Figur 15 den Innenraum des Turmsegmentes 200. Auch das innere Traggerüst 208 weist eine umlaufende Schiene, nämlich innere Umlaufschiene 210 auf. Auch in der Darstellung der Figur 15 ist eine Person skizziert, um die Größe des Traggerüstes 208 und damit der vorzusehenden inneren Teilabdeckvorrichtung zu veranschaulichen. Im Übrigen ist das Traggerüst 208, das im Wesentlichen zum Abspannen einer Abdeckplane vorgesehen ist, zum Halten des Traggerüstes 208 mit diesem verbunden.

## Patentansprüche

1. Wärmvorrichtung zum Wärmen eines ringförmig umlaufenden Stoßbereichs zwischen einem rohrförmigen Turmsegment (200) mit umlaufender Segmentwand und einem Turmfundament (204) einer Windenergieanlage beim Aufbau der Windenergieanlage, umfassend
- eine oder mehrere Abdeckplanen zum Abdecken des Stoßbereichs und
- eines oder mehrere ringförmige Traggerüste zum Tragen der bzw. einer der Abdeckplanen,
wobei zwischen dem Stoßbereich und der Abdeckplane ausreichend Raum für wenigstens eine erwachsene Person ist,
**gekennzeichnet durch**
- eine äußere Teilabdeckvorrichtung (202) zum Anordnen außen um das Turmsegment (200) herum,
wobei die Teilabdeckvorrichtung (202) eine der Abdeckplanen und eines der Traggerüste aufweist.

2. Wärmvorrichtung nach Anspruch 1, wobei
- eine inneren Teilabdeckvorrichtung zum Anordnen im Inneren des Turmsegmentes vorgesehen ist, die eine der Abdeckplanen und eines der Traggerüste aufweist.

3. Wärmvorrichtung nach Anspruch 1 oder 2, **dadurch gekennzeichnet, dass** das bzw. jedes Traggerüst einen ringförmig umlaufenden oberen Tragabschnitt zum Befestigen an dem Turmsegment aufweist.

4. Wärmvorrichtung nach einem der Ansprüche 1 bis 3, umfassend wenigstens ein Heizmittel, insbesondere Heizlüfter zum Erwärmen der Luft in dem Raum zwischen dem Stoßbereich und der Abdeckplane.

5. Verfahren zum Errichten eines Turms einer Windenergieanlage umfassend die Schritte:
- Anordnen eines ersten Turmsegmentes auf einem Fundament, und
- Anordnen einer Wärmvorrichtung nach einem der Ansprüche 1 bis 4 am Turmsegment und Abdecken eines ringförmig umlaufenden Stoßbereichs zwischen dem Turmsegment und dem Turmfundament.

## Claims

1. Heating device for heating an impact region which extends in an annular manner between a tubular tower segment (200) with a peripheral segment wall and a tower foundation (204) of a wind turbine when the wind turbine is constructed, comprising:
- one or more covering tarpaulins for covering the impact region, and
- one or more annular carrier frames for carrying the or one of the covering tarpaulins,
wherein there is sufficient space between the impact region and the covering tarpaulin for at least one adult person,
**characterised by**
- an outer part-covering device (202) for arranging at the outer side around the tower segment (200),
wherein the part-covering device (202) has one of the covering tarpaulins and one of the carrier frames.

2. Heating device according to claim 1, wherein
- there is provided for arrangement inside the tower segment an inner part-covering device which has one of the covering tarpaulins and one of the carrier frames.

3. Heating device according to claim 1 or claim 2, **characterised in that** the or each carrier frame has an upper carrier portion which extends in an annular manner for securing to the tower segment.

4. Heating device according to any one of claims 1 to 3, comprising at least one heating means, in particular fan heaters for heating the air in the space between the impact region and the covering tarpaulin.

5. Method for erecting a tower of a wind turbine, comprising the steps of:
- arranging a first tower segment on a foundation, and
- arranging a heating device according to any one of claims 1 to 4 on the tower segment and covering an impact region which extends in an annular manner between the tower segment and the tower foundation.

## Revendications

1. Dispositif de chauffage pour chauffer une zone d'aboutement périphérique en forme annulaire entre un segment de tour (200) de forme tubulaire pourvu d'une paroi de segment périphérique et des fondations de tour (204) d'une éolienne lors de l'installation de l'éolienne, comprenant
- une ou plusieurs bâches de recouvrement pour recouvrir la zone d'aboutement, et
- une ou plusieurs structures de support de forme annulaire pour supporter la ou une des bâches de recouvrement,
dans lequel l'espace entre la zone d'aboutement et la bâche de recouvrement est suffisant pour au moins une personne adulte,
**caractérisé par**
- un dispositif de recouvrement partiel (202) extérieur destiné à être disposé à l'extérieur tout autour du segment de tour (200),
dans lequel le dispositif de recouvrement partiel (202) présente une des bâches de recouvrement et une des structures de support.

2. Dispositif de chauffage selon la revendication 1, dans lequel
- un dispositif de recouvrement partiel intérieur est prévu afin d'être disposé à l'intérieur du segment de tour, lequel présente une des bâches de recouvrement et une des structures de support.

3. Dispositif de chauffage selon la revendication 1 ou 2, **caractérisé en ce que** la structure de support ou chaque structure de support présente, au niveau du segment de tour, un tronçon de support supérieur périphérique en forme annulaire, destiné à être fixé au niveau du segment de tour.

4. Dispositif de chauffage selon l'une quelconque des revendications 1 à 3, comprenant au moins un moyen chauffant, en particulier un radiateur soufflant pour chauffer l'air de la pièce entre la zone d'aboutement et la bâche de recouvrement.

5. Procédé pour ériger une tour d'une éolienne, comprenant les étapes consistant à :
- disposer un premier segment de tour sur des fondations, et
- disposer un dispositif de chauffage selon l'une quelconque des revendications 1 à 4 au niveau du segment de tour et recouvrir une zone d'aboutement périphérique en forme annulaire entre le segment de tour et les fondations de tour.
